# EUROPÄISCHE PATENTSCHRIFT

(11) **EP 1 137 546 B1**
(45) Veröffentlichungstag und Bekanntmachung des Hinweises auf die Patenterteilung: **24.09.2003**
(21) Anmeldenummer: 99970965.2
(22) Anmeldetag: 22.10.1999
(51) Int. Cl.: B44C 1/17, D06Q 1/12

(54) **SIEBDRUCK-REFLEXIONSTRANSFER UND VERFAHREN ZU DESSEN HERSTELLUNG**
SERIGRAPHY REFLECTION TRANSFER PRODUCT AND METHOD FOR PRODUCING THE SAME
TRANSFERT PAR REFLEXION SERIGRAPHIQUE ET SON PROCEDE DE PRODUCTION

(30) Priorität: 23.10.1998 DE 19848863; 08.04.1999 DE 19915713
(43) Veröffentlichungstag der Anmeldung: 04.10.2001
(73) Patentinhaber: Kaufmann, Harald, 45525 Hattingen (DE)
(72) Erfinder: Kaufmann, Harald, 45525 Hattingen (DE)
(74) Vertreter: Viering, Jentschura & Partner
(86) Internationale Anmeldenummer: EP9908036
(87) Internationale Veröffentlichungsnummer: WO00024594

(56) Entgegenhaltungen:
- EP-A- 0 503 738
- US-A- 5 503 906
- US-A- 5 631 064
- US-A- 5 674 605

## Beschreibung

Die Erfindung betrifft Reflexions-Transfersyteme sowie ein Verfahren zur Herstellung eines Reflexionstransfers im Siebdruckverfahren. Unter einem Reflexionstransfer im Sinne der vorliegenden Erfindung wird ein Transfer verstanden, dessen reflektierende Eigenschaften auf der Verwendung einer Farbe oder eines Trägermaterials beruht, in dem sich eine Vielzahl kleiner reflektierender Teilchen befinden.

### Stand der Technik

Derartige Reflexionsfarben sind seit langem bekannt. Die Reflexionseigenschaft dieser Farben beruht darauf, daß sich in der Farbmasse eine Vielzahl kleiner reflektierender Teilchen befindet. Derartige Teilchen können sphärische Gestalt haben und aus Metall, Glas, metallbeschichten Glas oder metallbeschichtetem Kunststoff bestehen. Eine geeignete Farbe wird z. B. von der Firma Sericol unter den Handelsnamen "Reflec 100" sowie _{"}Reflec 200" vertrieben.

Es sind auch Farben bekannt, bei denen die Reflexionsteilchen in Form von Splittern vorliegen.

Im Sinne der vorliegenden Erfindung werden unter Reflexionsfarben auch farblose oder durchscheinende Träger und Lacke verstanden, soweit sie Reflexionsteilchen enthalten.

Nach dem Stande der Technik können derartige Farben nur im Siebdruck-Direktverfahren verwandt werden, ohne die Reflexionseigenschaften im wesentlichen einzubü- ßen.

Bei dem Siebdruck-Direktverfahren wird die Reflexionsfarbe direkt auf ein Substrat aufgedruckt. Als Substrate können Textil- und Kunststoffbahnen verwendet werden. Das Bedrucken von verarbeiteten Textilien, wie Hemden, Jacken und T-Shirts ist ebenfalls möglich.

Das bekannte Siebdruck-Direktverfahren umfaßt die folgenden Arbeitsschritte:
1. Einbringen und Positionieren des zu bedruckenden Substrates in die Druckvorrichtung,
2. optionales Aufdrucken/Aufbringen einer Grundierung,
3. Aufdrucken/Aufbringen der Reflexionsfarbe.

Je nach Eigenschaften der verwendeten Grundierung und der Reflexionsfarbe können zwischen den einzelnen Verfahrensschritten weitere Trocknungsschritte vorgesehen sein.

Durch das Siebdruck-Direktverfahren können hochqualitative Drucke auf den genannten Substraten erstellt werden, wobei die Reflexionsfarbe ein sehr gutes Reflexionsvermögen aufweist.

Das Siebdruck-Direktverfahren weist jedoch eine Reihe von Nachteilen auf. Der Bedruck von konfektionierten Textilien wie Hemden oder Jacken ist äußerst schwierig, da die vorhandenen Nähte oder andere Applikationen an dem Textil den Druckvorgang stören oder verhindern. Auch ist eine exakte Positionierung des zu bedruckenden Textils in der Druckvorrichtung notwendig, was zu einem erhöhten Arbeitsaufwand führt. Hinzu kommt, daß die vorgefertigten Textilien in die Druckerwerkstatt verbracht werden müssen, was einen erhöhten Transportaufwand mit sich führt. Der Druck von Kleinserien beinhaltet jeweils die aufwendige Umrüstung der Druckvorrichtung, was ebenfalls nachteilig ist.

Insbesondere bei dem häufigen Kundenwunsch nach dem Druck von Kleinserien, die anschließend verkauft werden und in Abhängigkeit der Marktnachfrage mehrfach aufgelegt werden sollen, führt die Notwendigkeit, die Druckvorrichtung jeweils mit den entsprechenden Druckeinrichtungen auszurüsten, zu einem erhöhten Arbeitsund Kostenaufwand.

Um den Kundenwünschen nach wiederauflegbaren Kleinserien, eine bessere Maschinenauslastung durch verringerte Rüstzeiten sowie die Möglichkeit zu schaffen, die Applikation auf die Substrate unabhängig von dem Standort der Druckvorrichtung zu machen, werden bekanntermaßen Transfer-Systeme verwendet.

Die bekannten Siebdruck-Transfer-Systeme werden wie folgt hergestellt und verwendet:
Vorlage eines Transferträgers, z. B. aus silikonisiertem oder gewachstem Papier,
Aufbringen/Aufdrucken der Farbe,
Aufbringen/Aufdrucken eines Klebers.

Sollen mit den genannten Transfer-Systemen Motive hergestellt werden, so sind die Motive spiegelverkehrt auf den Transferträger zu drucken.

Derartige Transfer-Systeme können in einfacher Weise kostengünstig und in hohen Stückzahlen hergestellt werden.

Die hergestellten Transfers können zum Kunden verbracht werden und dort je nach Bedarf mittels einer einfachen Transferpresse auf die gewünschten Substrate appliziert werden. Dabei ist es möglich, daß der Endkäufer aus einer Vielzahl von vorgefertigten Transfers ein Motiv auswählt und auf ein von ihm ebenfalls individuell ausgewähltes Substrat applizieren läßt. Durch die Verwendung derartiger Transfersysteme ist es möglich, an nahezu beliebigen Verkaufsorten Substrate bereitzustellen, die mit Motiven gemäß der Kundenwünsche versehen werden.

Die Applikation erfolgt indem das Substrat in die Transferpresse eingebracht und positioniert, das Transfer mit der Klebstoffschicht auf das Substrat aufgebracht und positioniert, das Transfer mittels Transferpresse unter Zuhilfenahme von Druck und ggfs. erhöhter Temperatur auf dem Substrat appliziert, das mit dem Motiv versehene Substrat aus der Transferpresse entnommen und der Transferträger von dem Substrat entfernt wird.

Es zeigt sich jedoch, daß bei Verwendung von Reflexionsfarben in den bekannten Siebdruck-Transfersytemen, die Reflexionsfarben nach der Applikation auf das Substrat in unerwünschter Weise kaum mehr Reflexionseigenschaften aufweisen.

Die DE-AS 1 446 828 offenbart ein Verfahren zur Herstellung einer reflektierenden Übertragungsfolie sowie die daraus hergestellten Übertragungsfolien, bei dem auf einen, mit einem in der Wärme erweichenden Kunststoff beschichteten, Träger unter Hitzeeinwirkung sphärische Reflexionsteilchen in die Oberfläche der Kunststoffschicht eingebracht werden. Anschließend wird auf die erkaltete Kunststoffschicht mit den daraus herausragenden Reflexionsteilchen eine Schichtenfolge, bestehend aus einem Kautschuk-Bindemittel, einer optionalen Wärmesperrschicht, einem Kleber und abschließend einem zweiten Träger, aufgebracht. Die Applikation erfolgt, indem der zweite Träger entfernt wird und die offenliegende Klebeseite unter Wärmezuführung mit dem textilen Substrat verbunden wird. Zuletzt wird der Kunststoff-beschichtete Träger abgezogen.

Die US-P-3 420 597 offenbart ein Verfahren zur Herstellung einer hochreflektierenden Beschichtung auf einem starren Substrat, wie z.B. einem Verkehrsschild. Dabei wird eine Farbe, enthaltend vollständig metallbeschichtete Mikro-Sphäroide auf das Substrat aufgebracht, wobei nach Abtrocknen der Farbmasse die Mikro-Sphäroide über die Oberfläche der Farbschicht erhaben sind. In einem weiteren Behandlungsschritt wird die Metallbeschichtung der Sphäroide, die über die Farbschicht hinausragt, mittels Ätzen entfernt, wodurch ein besonders vorteilhaftes Reflexionsvermögen erreicht wird.

Die US-P-5 631 064 beschreibt ein Verfahren zur Herstellung eines Reflexionstransfers, bei dem eine Rückenschicht vorgelegt ist, auf die eine warmerweichbare Kunststoffschicht aufgebracht ist, in welcher sich reflektierende Sphäroide mit etwa 30-40 % ihres Umfanges befinden. Optional kann auf die Oberfläche der Sphäroide eine Spiegelschicht aufgebracht sein. In einem zweistufigen Verfahren wird auf die Oberfläche der Sphäroide zuerst ein Kunstharz-Bindemittel und anschließend ein Transfer-Klebstoff gedruckt. Bei einer figürlichen Darstellung hat der Druck spiegelverkehrt zu erfolgen.

Das Transfer wird zur Applikation auf ein Substrat, z.B. ein Textil, mit der Transfer-Klebemittelseite aufgebracht und verklebt. Abschließend wird die Rükkenschicht mit der warmerweichbaren Kunststoffschicht abgezogen, wobei die Sphäroide in der ausgehärteten Bindemittelschicht verbleiben.

Die AT-P-200 691 beschreibt ein flüssiges reflektierendes Anstrichmittel, bei dem eine Reflexion durch eine Vielzahl kleiner Glas- oder Metallpartikel bewirkt wird.

Aufgabe der vorliegenden Erfindung ist es, die Nachteile des Standes der Technik zu überwinden und ein Siebdruck-Reflexions-Transfersystem sowie ein Verfahren zu dessen Herstellung bereitzustellen, bei dem die Reflexionsfarbe nach dem Transfer auf das Substrat wesentliche Reflexionseigenschaften aufweist.

Eine weitere Aufgabe der vorliegenden Erfindung ist es, ein Siebdruck-Reflexions-Transfersystem sowie ein Verfahren zu dessen Herstellung bereitzustellen, bei dem wenigstens ein Teil der Reflexionsteilchen der erfindungsgemäß verwendeten Reflexionsfarbe über die ausgetrocknete Farbschicht erhaben sind.

Gelöst werden die Aufgaben nach den Merkmalen der unabhängigen Ansprüche. Bevorzugte Ausführungsformen sind in den abhängigen Ansprüchen dargestellt.

Der Erfindung liegt dabei die Erkenntnis zugrunde, daß die Reflexionen bei den erfindungsgemäß verwendeten Reflexionsfarben im wesentlichen durch Reflexionspartikeln bewirkt wird, die erhaben sind über die Oberfläche der ausgehärteten Farbschicht. Im Sinne der vorliegenen Erfindung wird darunter verstanden, daβ wenigstens ein Teil der verwendeten Reflexionsteilchen mit einem Teil ihrer Oberfläche aus der Oberfläche der Trägerschicht herausragen.

Das erfindungsgemäße Verfahren zur Herstellung eines Siebdruck-Reflexions-Transfersystems geht den folgenden Weg:

Zuerst wird ein Grundträger, nachfolgend Basismedium genannt, für das aufzubringende Transfer vorgelegt. Das Basismedium kann üblicherweise aus einer Papieroder Kunststoffolie mit klebemittelabweisender Oberfläche bestehen. Die klebemittelabweisenden Eigenschaften werden durch silikonisieren oder wachsen des Basismediums erreicht. Als Basismedium können alle üblichen und bekannten klebemittelabweisenden Folien und Bahnen verwendet werden, wobei alleine die Einschränkung gilt, daß die Oberfläche des Basismediums hinreichend klebemittelabweisend ist, um ein zerstörungsfreies Ablösen einer aufgebrachten Klebemittelschicht zu gewährleisten. Ein geeignetes Basismedium wird z. B. von der Fa. B. Laufenberg GmbH unter dem Handelsnamen NP 950 vertrieben.

Auf die klebemittelabweisende Oberfläche des Basismediums wird im Siebdruckverfahren ein Transferkleber aufgedruckt. Der Aufdruck wird dabei seitenrichtig entsprechend dem gewünschten Motiv ausgeführt. Dies ist in verschiedenen, frei wählbaren Motiven, als Fläche oder auch freistehend, möglich. Unter freistehende Motive werden dabei Motive verstanden, die aus wenigstens zwei nicht miteinander verbundenen Teilen bestehen.

Als Klebemittel können übliche hitze- und/oder druckempfindliche Kleber für Siebdruck-Transfersysteme verwendet werden. Ein geeignetes Klebemittel ist z. B. der unter dem Handelsnamen Metratan FT 421 von der Fa. Sericol erhältliche Klebstoff.

Die Klebemittel können, insbesondere in ausgehärtetem Zustand, transparent, durchscheinend, farbig durchscheinend oder farbig deckend sein.

In einer bevorzugten Ausführungsform ist das Klebemittel weiß eingefärbt. Durch den so geschaffenen weißen Grund, auf den später die Reflexionsfarbe aufgebracht wird, kann ein Transfer geschaffen werden, bei dem, nach der Applikation auf das Substrat, die farbgebenden Bestandteile der Reflexionsfarbe in besonders vorteilhafter Weise zur Geltung kommen.

Durch die Verwendung eines weißen Grunds wird die Farbwirkung verstärkt, die Farben werden intensiver und die Farbverläufe sind gleichmäßiger. Auch erscheinen die Reflexionen kräftiger.

Insbesondere wird hierdurch ein möglicher störender Einfluß der Eigenfarbe des Substrates auf das farbliche Erscheinungsbild des Transfers vermieden.

In einem optionalen Arbeitsschritt kann die Klebemittelschicht auf dem Basismedium getrocknet werden. Dies kann mittels einer Trockenstrecke oder einer anderen bekannten Möglichkeit geschehen.

Im folgenden Arbeitsschritt wird die Reflexionsfarbe auf die Klebemittelschicht im Siebdruckverfahren aufgedruckt. Soweit ein Motiv dargestellt werden soll, wird dieses in der Draufsicht seitenrichtig aufgedruckt. Der Aufdruck kann in üblicher Weise ein- oder mehrfarbig geschehen.

Nachfolgend wird ein Trocknungschritt durchgeführt, bei dem die aufgedruckte Reflexionsfarbe sowie ggfs. die Klebemittelschicht getrocknet werden. Dies kann durch eine Trockenstrecke oder andere bekannte Möglichkeiten geschehen.

Das fertige Transfer, das aus der Klebemittelschicht und der Reflexionsfarbe gebildet wird und sich auf dem Basismedium befindet, kann mit einem selbstklebenden, flexiblen Übertragungsmedium, vorzugsweise vollflächig, beschichtet bzw. überzogen werden. Das ansich bekannte Übertragungsmedium kann aus einer Folie oder einem Papier bestehen, das mit einem üblichen Übertragungskleber beschichtet ist. Nach dem Aufziehen des Übertragungsmediums kann das Transfer der Applikation zugeführt werden. Die Applikation ist dabei weder zeitlich noch räumlich an die Herstellung des Transfers gebunden.

Zur Applikation wird das Basismedium von dem Transfer abgezogen und die Schicht des Klebemittels freigelegt. Das Transfer wird mit der Klebemittelschicht aus das Substrat aufgelegt und mit einer Transferpresse mittels Wärme und/oder unter Druck aufgepreßt. Dabei verbindet sich das Klebemittel mit dem jeweiligen Substrat. Im Heimbereich kann der Transfer auch z. B. mittels eines Bügeleisens durchgeführt werden.

Abschließend wird das Übertragungsmedium, ggfs. nach Abkühlen, von dem nun beschichteten Substrat abgezogen.

Die in dem erfindimgsgemäßen Verfahren verwendeten Reflexionsfarben sind Farben, deren Reflexionsvermögen für auftreffendes Licht darauf beruht, daß in der Farbmasse sich reflektierende Teilchen befinden. Diese reflektierende Teilchen können aus Metall, Glas, metallbeschichtetem Glas oder metallbeschichtetem Kunststoff bestehen. Die Reflexionsteilchen können sphärisch oder nahezu sphärisch sein oder die Form von Splittern oder Nadeln haben. Der Durchmesser der sphärischen oder nahezu sphärischen Teilchen ist im Bereich von 10 bis 110 µm, vorzugsweise 25 bis 40 µm. Die Längsausdehnung der Splitter oder Nadeln ist im Bereich von 10 bis 110 µm, vorzugsweise 40 bis 80 µm.

Die Farbmasse kann weiterhin ein oder mehrere Pigmente enthalten, wodurch die Aufsicht und das Erscheingungsbild bei Tageslicht verbessert wird. Weiterhin erscheint die Reflexion bei Dunkelheit farbig.

Das erfindungsgemäße Verfahren macht in vorteilhafter Weise von der Erkenntnis Gebrauch, daß durch den Verfahrensschritt des Trocknens der aufgebrachten Reflexionsfarbe die Reflexionseigenschaften der Reflexionsfarbe deutlich verbessert werden. Durch diesen Kunstgriff wird ein Transfer geschaffen, das die Handhabungsvorteile eines Transfers besitzt und gleichzeitig ein Reflexionsvermögen aufweist, wie es bisher nur durch das Direkt-Siebdruck-Verfahren erreicht wurde.

Ohne sich darauf beschränken zu wollen, wird davon ausgegangen, daß es durch den Verfahrensschritt der Trocknung und Aushärtung dazu kommt, daß die über die Farbschicht erhabenen Reflexionspartikeln in dieser Position fixiert werden. Unterstützt wird dieser Effekt dadurch, daß bei dem Trocknungsprozeß ein Volumenverlust der Farbschicht und damit eine Verringerung der Schichtdicke eintritt, insbesondere durch den Abgang von Wasser und/oder Lösemitteln. Durch die Verringerung der Schichtdicke während des Trocknungs- bzw. Aushärtungsprozeß kann es dazu kommen, daß weitere Reflexionsteilchen sich über die Oberfläche der Farbschicht erheben und damit für die Reflexion zur Verfügung stehen. Die Reflexionspartikel können sich um etwa 30 % ihres Durchmessers oder ihrer Längenausdehnung über die Oberfläche der getrockneten Farbschicht erheben.

In einer weiteren Ausführungsform der vorliegenden Erfindung wird auf die Klebemittelschicht eine zusätzliche Zwischenlage einer Farbe, die keine Reflexionsfarbe ist, aufgedruckt. Auf diese Zwischenlage wird anschließend die Reflexionsfarbe gedruckt.

Der Aufdruck der Zwischenlage auf die Klebemittelschicht und/oder der Aufdruck der Reflexionsfarbe auf die Zwischenlage kann wie zuvor ausgeführt naß-in-naß oder mit zwischengeschalteten Trocknungsschritten durchgeführt werden.

Die Zwischenlage kann durch den Aufdruck beliebiger ein- oder zweikomponentigen Druckfarben für das Siebdruckverfahren gebildet werden. Die für die Bildung der Zwischenschicht verwendete Farbe ist vorzugsweise eine hochdeckende Farbe, wobei in Abhängigkeit des gewünschten Motives oder Farbeffektes jede beliebige Farbnuance gewählt werden kann. Geeignete Farben werden unter dem Handelsnamen NB 021 von der Firma Sericol sowie unter dem Handelsnamen Maraflor TK von der Firma Marabu vertrieben.

Die Farbe zur Bildung der Zwischenschicht kann in der gleichen Dicke wie die Klebemittelschicht und/oder die Reflexionsfarbe aufgedruckt werden, bevorzugt ist jedoch eine Schichtdicke von 5 bis 50 µm, insbesondere von 10 bis 20 µm.

Durch die Verwendung der genannten Zwischenschicht wird ein erfindungsgemäßes Transfer gebildet, das gegenüber dem erfindungsgemäßen Transfer ohne Zwischenschicht eine erhöhte Zugfestigkeit sowie Reißfestigkeit aufweist. Auch weisen die als Zwischenschicht verwendeten Druckfarben üblicherweise eine höhere Farbdeckung auf als eingefärbte Transferklebemittel, wodurch die vorteilhaften Eigenschaften, wie sie bei der Verwendung eingefärbter Transferklebemittel erhalten werden, in verstärktem Maße erzielt werden.

Besonders vorteilhaft ist die Kombination einer Klebemittelschic aus einem transparenten oder durchscheinenden Klebemittels mit einer hochdeckenden Zwischenschicht aus weißer Farbe. Bei der Applikation des Transfers auf das Substrat, insbesondere beim Heißtransfer unter Druck, kann das Klebemittel in die obere Substratschicht fließen, in geringen Menge seitlich zwischen dem Transfer und dem Substrat austreten und einen Rand um das applizierte Transfer bilden. Bei Verwendung eines farbigen Klebemittels kann dies zu unerwünschten farbigen Rändern führen. Bei der zuvor genannten Kombination findet kein Fließen der ausgehärteten Zwischenfarbschicht statt, so daß kein Farbrand um das applizierte Transfer gebildet wird. Austretendes farbloses Klebemittel bildet zwar weiterhin einen Rand um das applizierte Transfer, wobei jedoch aufgrund der Transparenz des Klebemittels kein unerwünschter Farbrand gebildet wird.

In einer weiteren Ausführungsform können die Reflexionsfarbe sowie der Transferkleber in einem Arbeitsschritt auf das Basismedium aufgebracht werden. Dabei entfällt die optionale Zwischenschicht für einen gesonderten Farbauftrag.

Zur gemeinsamen Auftragung des Klebemittels und der Reflexionsfarbe kann ein Gemisch aus diesen hergestellt werden, wobei anschließend das Gemisch in einem Arbeitsschritt aufgedruckt wird.

Unter einem Klebemittel/Reflexionsfarbe-Gemisch im Sinne der vorliegenden Erfindung sind dabei auch Rezepturen zu verstehen, die bereits vorgefertigt sind und ein transparentes, durchscheinendes oder eingefarbtes Klebemittel sowie die Reflexionsteilchen umfassen. Besonders geeignet ist ein Transferklebemittel auf Plastisol-Basis enthaltend die Reflexionsteilchen. Derartige Plastisol-Kleber enthaltend Reflexionsteilchen sind bekannt, und werden im Handel vertrieben.

In der Ausführungsform, bei der das Transferklebemittel/Reflexionsfarbe-Gemisch oder das Transferklebemittel enthaltend Reflexionsteilchen in einem Arbeitsgang aufgetragen wird, wird wie folgt vorgegangen:

Zuerst wird das Basismedium mit klebemittelabweisender Oberfläche vorgelegt. Auf die klebemittelabweisende Oberfläche wird das Transferklebemittel/Reflexionsfarbe-Gemisch oder das Reflexionsteilchen enthaltende Transferklebemittel im Siebdruckverfahren aufgedruckt.

Soweit Motive dargestellt werden sollen, werden diese seitenrichtig aufgedruckt. Bei mehrfarbigen Motiven werden die jeweils farbigen Transferklebemittel/Reflexionsfarbe-Gemische oder reflexionsteilchenhaltige Transferklebemittel auf die entsprechenden Bereiche des Basismediums gedruckt. Bei mehrfarbigen Motiven kann der Druck Naß-In-Naß geschehen oder die jeweiligen Bereiche zwischen den einzelnen Druckschritten getrocknet werden.

Abschließend erfolgt eine Trocknung, bei der die Reflexionsteilchen in der zuvor beschriebenen Weise über die Oberfläche des aufgedruckten Gemisches oder Klebemittels erheben, soweit dies nicht bereits in den optionalen Zwischentrocknungsschritten geschehen ist.

Das fertige Transfer, das sich auf dem Basismedium befindet, kann, wie oben ausgeführt, mit einem selbstklebenden, flexiblen Übertragungsmedium überzogen werden.

Diese Ausführungsform hat den weiteren Vorteil, daß bei der Herstellung des Transfers ein Arbeitsschritt, nämlich das Auftragen bzw. Aufdrucken einer separaten Transferkleberschicht, entfällt.

Andererseits ist bei derartigen Transfers mit nur einer aufgedruckten Lage bei der Applikation mittels Transferpresse besondere Vorsicht angebracht, da bei der Applikation der Klebstoff erweicht wird, um auf die Oberfläche des Substrates aufgetragen zu werden bzw. um in diese eindringen zu können. Gleichzeitig erweicht sich damit das Bett, in dem die Reflexionsteilchen eingebettet und über dessen Oberfläche sie erhaben sind. Bei der Applikation ist insofern Vorsicht walten zu lassen, daß der Druck der Transferpresse oder ähnlichem auf die erhabenen Reflexionsteilchen nicht so hoch wird, das diese vollständige in ihr Bett eingepreßt werden, wodurch die Reflexionseigenschaft weitestgehend verloren geht. Ein geringfügiges Einpressen der Reflexionsteilchen in das erweichte Bett kann jedoch im Umfange der Erfindung hingenommen werden, soweit die Reflexionseigenschaften nicht wesentlich nachteilig beeinflußt werden.

Die Erfindung wird nachfolgend anhand der Figuren und Ausführungsbeispiele genauer beschrieben.

### Kurze Beschreibung der Figuren:

- Fig. 1: zeigt ein Transfer das nach dem erfindungsgemäßen Verfahren hergestellt wurde nach dem Verfahrensschritt der Trocknung der Reflexionsfarbe.
- Fig. 2: zeigt ein nach dem erfindungsgemäßen Verfahren hergestelltes Transfer mit aufgebrachter Übertragungsfolie.
- Fig. 3: zeigt ein mit dem erfindungsgemäßen Verfahren hergestelltes Transfer, das auf ein Substrat appliziert ist und unter Lichteinfall steht.
- Fig. 4: zeigt ein Transfer nach dem Stande der Technik, bei dem die Reflexionsfarbe auf den Transferträger aufgebracht ist.
- Fig. 5: zeigt ein Transfer gemäß des Standes der Technik nach Fig. 4, wobei weiterhin ein Transferkleber aufgebracht ist.
- Fig. 6: zeigt ein Transfer gemäß des Standes der Technik das auf ein Substrat aufgebracht ist und sich unter Lichteinfall befindet.
- Fig. 7: zeigt ein mit dem erfindungsgemäßen Verfahren hergestelltes Transfer nach dem Verfahrensschritt der Trocknung der Reflexionsfarbe, wobei sich zwischen der Klebemittelschicht und der Schicht der Reflexionsfarbe eine Zwischenschicht befindet.

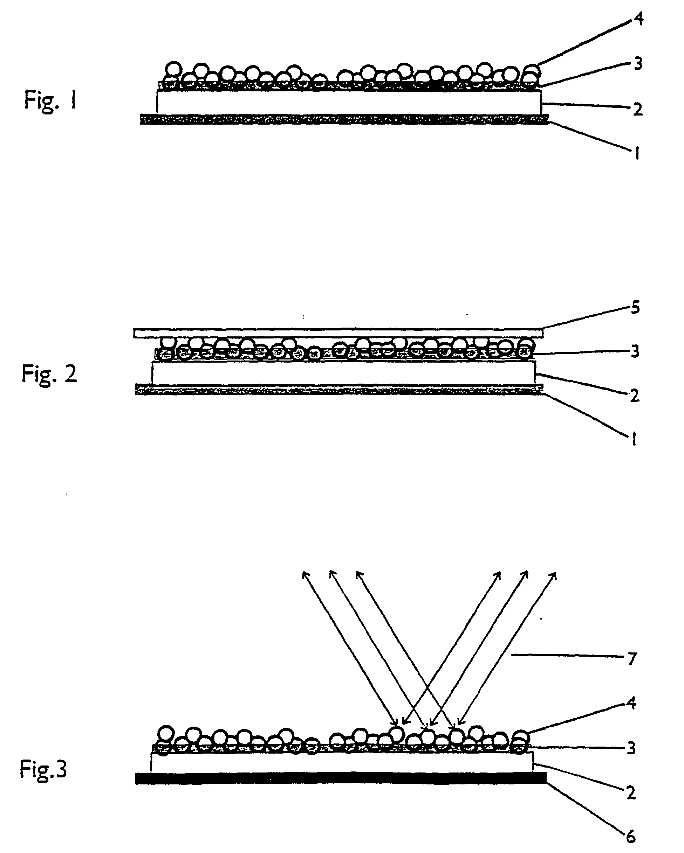

Fig. 1 zeigt ein Transfer nach dem Arbeitsschritt des Trocknens der Farbschicht, bestehend aus dem Basismedium 1 auf das der Transferkleber 2 im Siebdruckverfahren aufgedruckt ist. Auf den Transferkleber 2 ist die Farbschicht 3 seitenrichtig im Siebdruckverfahren aufgedruckt. Über die freie Oberfläche der getrockneten und erhärteten Farbschicht sind wenigstens ein Teil der in der Farbschicht 3 enthaltenen Reflexionsteilchen 4 mit einem Teil ihres Umfanges erhaben.

Fig. 2 zeigt ein nach dem erfindungsgemäßen Verfahren hergestelltes Reflexionstransfer wie Fig. 1, wobei weiterhin eine mit einem Klebemittel versehene Übertragungsfolie 5 auf der Farbschicht 3 aufgebracht ist. Dabei werden die Reflexionsteilchen 4 durch die Übertragungsfolie 5 nicht mehr in die erhärtete Farbschicht 3 eingedrückt.

Fig. 3 zeigt ein nach dem erfindungsgemäßen Verfahren hergestelltes Reflexionstransfer umfassend den Transferkleber 2, die getrocknete und erhärtete Farbschicht 3 mit den erhabenen Reflexionsteilchen 4, wobei das Transfer auf das Substrat 6 aufgebracht ist. Weiterhin sind die einfallenden Lichtstrahlen 7 zu sehen, die durch die Reflexionsteilchen 4 reflektiert werden.

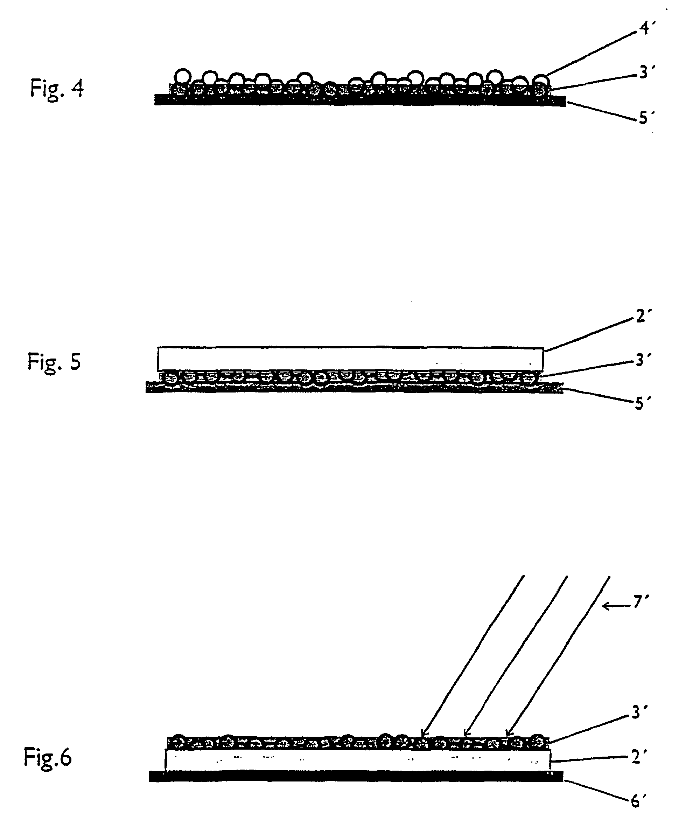

Fig. 4 zeigt einen Transfer gemäß des Standes der Technik in dem Herstellungsschritt, wobei die Reflexionsfarbe 3' auf den Transferträger 5' aufgebracht ist. Dabei ist die Seite der Farbschicht 3', die später die dem Licht zugewandte Oberfläche bildet, dem Transferträger 5' zugewandt. Auf der später dem Substrat zugewandten Seite der Farbschicht 2' erheben sich die Reflexionsteilchen 4'. Durch die Kontaktierung der Farbschicht 3' mit dem Transferträger 5' können sich die Reflexionsteilchen 4' nicht über die spätere Außenfläche der Farbschicht 3' erheben.

Fig. 5 zeigt einen Transfer gemäß des Standes der Technik in dem Herstellungsschritt, bei dem der Transferkleber 2' auf die Reflexionsfarbe 3' aufgebracht ist. Dabei ist zu erkennen, daß die, über die Oberfläche der Farbschicht 3' erhabenen Reflexionsteilchen 4' in den Transferkleber 2' eingebettet werden.

Fig. 6 zeigt ein Transfer gemäß des Standes der Technik, das auf ein Substrat 6 aufgebracht ist, wobei der Transferkleber 2' sich zwischen dem Substrat 6 und der Farbschicht 3' befindet. Die dem einfallenden Licht 7 zugewandte Seite der Farbschicht 3' weist keine erhabenen Reflexionsteilchen 4' auf. Durch die in die Farbschicht 3' und den Transferkleber 2' eingebetteten Reflexionsteilchen 4' wird die einfallende Lichtstrahlung 7 nur unzureichend zurückgeworfen und praktisch kein Reflexionseffekt ausgeübt.

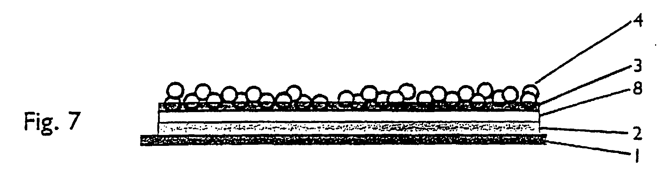

Fig. 7 zeigt ein erfindungsgemäßes Transfer nach dem Arbeitsschritt des Trocknes der Farbschicht, bestehend aus dem Baismedium 1 auf das der Transferkleber 2 im Siebdruckverfahren aufgedruckt ist. Auf den Transferkleber 2 ist die Zwischenfarbschicht 8 seitenrichtig im Siebdruckverfahren aufgedruckt. Auf die Zwischenfarbschicht 8 ist die Farbschicht 3 aufgedruckt. Über die freie Oberfläche der getrockneten und erhärteten Farbschicht sind wenigstens ein Teil der in der Farbschicht 3 enthaltenen Reflexionsteüchen 4 mit einem Teil ihres Umfanges erhaben.

### Beispiele

### Ausführungsbeispiel 1:

In eine vollautomatische Siebdruckmaschine, ausgestattet mit einem Siebdruckrahmen mit einer Gewebebespannung von 21er - 77er, einem Druckrakel aus mehrschichtigem Polyurethan und einem Flutrakel aus Metall wird ein silikonbeschichtetes Papier vom Typ NP 950 der Fa. Laufenberg GmbH als Basismedium eingebracht. Anschließend wird ein Transferkleber vom Typ Metratan FT 421 der Fa. Sericol in einer Schichtdicke von 100 bis 300 µm aufgedruckt. Der Transferkleber wird in einer Trockenstrecke mit einem Infrarottrockner bei einer Trocknungstemperatur zwischen 80-120°C getrocknet. Auf den Transferkleber wird die Reflexionsfarbe oder ein Gemisch von Reflexionsfarben in einer Naßschichtdicke von 100 bis 300 µm aufgedruckt. Abschließend erfolgt eine Trocknung in einer Trockenstrecke mit einem Infrarottrockner bei einer Trocknungstemperatur zwischen 80-120°C. Auf das fertige Transfer wird ein Übertragungsmedium aus einem mit Kleber versehenen Papier aufgebracht.

### Ausführungsbeispiel 2:

In eine Siebdruckmaschine, wie sie in Beispiel 1 verwendet wurde, wird ein silikonbeschichtetes Papier vom Typ NP 950 der Fa. Laufenberg GmbH als Basismedium eingebracht. Anschließend wird ein transparenter Transferkleber vom Typ Metraton FT 421 der Fa. Sericol mit einer Schichtdicke von 100 bis 200 µm aufgedruckt und in einer Trockenstrecke mit einem Infrarottrockner bei einer Temperatur zwischen 80° bis 120°C getrocknet. Auf den Transferkleber wird eine etwa 20 µm starke Zwischenschicht aus NB 021, der Firma Sericol, in weißem Farbton aufgedruckt und ebenso getrocknet. Auf die getrocknete Zwischenschicht wird eine Reflexionsfarbe vom Typ Reflek 100 der Firma Sericol in einer Stärke von 100 bis 120 µm aufgedruckt. Abschließend erfolgt eine Lufttrocknung. Auf das fertige Transfer wird ein Übertragungsmedium aus einem mit einem Kleber versehenem Papier aufgebracht.

### Ausführungsbeispiel 3:

In eine Siebdruckmaschine, wie in Beispiel 1 verwendet, wird ein silikonbeschichtetes Papier vom Typ NP 950 als Basismedium eingebracht. Anschließend wird ein farbiger Transferkleber enthaltend Reflexionsteilchen mit einer Schichtdicke von 100 bis 250 µm aufgedruckt und in einer Trockenstrecke bei einer Temperatur zwischen 50°C bis 120°C getrocknet. Auf das fertige Transfer wird ein Übertragungsmedium aus einem mit einem Kleber versehenen Papier aufgebracht.

## Patentansprüche

1. Verfahren zur Herstellung eines Siebdruck-Reflexionstransfers umfassend die Schritte:
Vorlage eines klebemittelabweisenden Basismediums (1),
Bedrucken des Basismediums (1) mit einem Transferklebemittel (2),
Aufdrucken einer Reflexionsfarbe (3), wobei die verwendete Reflexionsfarbe eine Vielzahl von Reflexionsteilchen enthält,
Trocknen des Transfers.

2. Verfahren nach Anspruch 1, **dadurch gekennzeichnet, daß** auf das aufgedruckte Transferklebemittel (2) vor dem Aufdruck der Reflexionsfarbe (3), in einem zusätzlichen Schritt eine Zwischenfarbschicht (8) aufgedruck wird.

3. Verfahren nach Anspruch 1 oder 2, **dadurch gekennzeichnet, daß** das Transferklebemittel (2) nach dem Aufdruck auf das Basismedium (1) und vor dem Aufdruck der Reflexionsfarbe (3) und/oder der Zwischenfarbschicht (8) getrocknet wird.

4. Verfahren nach einem der Ansprüche 2 oder 3, **dadurch gekennzeichnet, daß** die Zwischenfarbschicht (8) vor dem Aufdruck der Reflexionsfarbe (3) getrocknet wird.

5. Verfahren zur Herstellung eines Siebdruck-Reflexionstransfers umfassend die Schritte:
Vorlage eines Klebemittel abweisenden Basismediums,
Bedrucken des Basismediums mit einem Transferklebemittel/Reflexionsfarbe-Gemisch wobei das Gemisch eine Vielzahl von Reflexionsteilchen enthält oder mit einem Transferklebemittel das eine Vielzahl von Reflexionsteilchen enthält,
Trocknen des Transfers.

6. Verfahren nach einem der vorhergehenden Ansprüche, **dadurch gekennzeichnet, daß** auf das getrocknete und gehärtete Transfer weiterhin ein Übertragungsmedium (5) aufgebracht wird.

7. Verfahren nach einem der vorhergehenden Ansprüche, **dadurch gekennzeichnet, daß** das Transferklebemittel transparent, farbig durchscheinend oder vollfarbig ist, insbesondere das es vollfarbig weiß ist.

8. Verfahren nach einem der vorhergehenden Ansprüche, **dadurch gekennzeichnet, daß** Reflexionsteilchen (4) verwendet werden, die im wesentlichen sphärisch sind und einen Korndurchmesser im Bereich von 10 bis 100 µm, vorzugsweise 25 bis 40 µm haben oder die im wesentlichen die Form von Splittern oder Nadeln und eine Längsausdehnung im Bereich von 10 bis 110 µm, vorzugsweise 40 bis 80 µm haben oder Gemische hieraus.

9. Verfahren nach einem der vorhergehenden Ansprüche, **dadurch gekennzeichnet, daß** die Schichten des Transfers so auf das Basismedium aufgedruckt werden, daß das dargestellte Motiv in der Aufsicht seitenrichtig ist.

10. Reflexionstransfer mit der Schichtfolge:
Basismedium (1), Transferklebemittel (2), optionale Zwischenfarbschicht (8), Reflexionsfarbe (3), wobei die Reflexionsfarbe (3) eine Vielzahl von Reflexionsteilchen (4) enthält, und das die Reflexionsteilchen (4) über die Oberfläche der ausgehärteten Reflexionsfarbe (3) erhaben sind.

11. Substrat auf das ein Reflexionstransfer nach Anspruch 10 appliziert ist.

12. Reflexionstransfer nach Anspruch 10 **dadurch gekennzeichnet, daß** das Transferklebemittel (2) transparent ist und eine weiße Zwischenfarbschicht (8) enthaltend ist.

13. Reflexionstransfer mit einem Basismedium, **dadurch gekennzeichnet, daß** sich auf dem Basismedium ein Gemisch eines Transferklebemittels und einer Reflexionsfarbe mit einer Vielzahl von Reflexionsteilchen oder Transferklebemittel mit einer Vielzahl von Reflexionsteilchen befindet, wobei die Reflexionsteilchen über die Oberfläche des ausgehärteten Gemisches oder des Transferklebemittels erhaben sind.

14. Reflexionstransfer nach einem der Ansprüche 10, 12, 13 **dadurch gekennzeichnet, daß** auf das Transfer mit den erhabenen Reflexionsteilchen (4) ein Übertragungsmedium (5) aufgebracht ist.

15. Reflexionstransfer nach einem der Ansprüche 10, 12-14 **dadurch gekennzeichnet, daß** die Reflexionsteilchen (4) im wesentlichen sphärisch sind und einen Korndurchmesser im Bereich von 10 bis 100 µm, vorzugsweise 25 bis 40 µm haben oder das sie im wesentlichen die Form von Splittern oder Nadeln mit einer Längsausdehnung im Bereich von 10 bis 110 µm, vorzugsweise 40 bis 80 µm haben oder das es Gemische aus den vorgenannten sind.

## Claims

1. Process for the manufacture of a screen print reflection transfer, comprising the steps:
Providing an adhesive-repellant base medium (1);
Imprinting the base medium (1) with a transfer adhesive (2);
Printing a reflection ink (3), whereby the reflection ink being used is containing a plurality of reflection particles; and
Drying the transfer.

2. Process according to claim 1, **characterized in that**, before printing the reflection ink (3), an intermediate ink layer (8) is imprinted in an additional step onto the imprinted transfer adhesive agent (2).

3. Process according to claim 1 or 2, **characterized in that** the transfer adhesive (2) is dried after imprinting the base medium (1) and before printing the reflection ink (3) and/or the intermediate ink layer (8).

4. Process according to any of claims 2 or 3, **characterized in that** the intermediate ink layer (8) is dried before printing the reflection ink (3).

5. Process for the manufacture of a screen print reflection transfer, comprising the steps:
Providing an adhesive-repellant base medium;
Imprinting the base medium with a transfer adhesive/reflection ink mixture, whereby the mixture contains a plurality of reflection particles, or with a transfer adhesive which contains a plurality of reflection particles; and
Drying the transfer.

6. Process according to any of the foregoing claims, **characterized in that** a transfer medium (5) is additionally applied to the dried and hardened transfer.

7. Process according to any of the foregoing claims, **characterized in that** the transfer adhesive is transparent, colored translucent, or full-colored, and in particular that it is full-color white.

8. Process according to any of the foregoing claims, **characterized in that** reflection particles (4) are used which are essentially spherical in shape and which have a grain diameter in the range from 10 to 100 µm, preferably 25 to 40 µm, or which essentially have the form of chips or needles and a longitudinal extension in the range from 10 to 110 µm, preferably 40 to 80 µm, or a mixture thereof.

9. Process according to any of the foregoing claims, **characterized in that** the transfer layers are printed onto the base medium in such a way that the motif represented is of the correct side in the plan view.

10. Reflection transfer having the layer sequence:
Base medium (1), transfer adhesive (2), optional intermediate layer (8), reflection ink (3), whereby the reflection ink (3) contains a plurality of reflection particles(4) and whereby the reflection particles (4) are raised above the surface of the hardened reflection ink (3).

11. Substrate onto which a reflection transfer according to claim 10 is applied.

12. Reflection transfer according to claim 10, **characterized in that** the transfer adhesive (2) is transparent and a white intermediate ink layer (8) is contained.

13. Reflection transfer with a base medium, **characterized in that** a mixture of a transfer adhesive and a reflection ink containing a plurality of reflection particles or transfer adhesive containing a plurality of reflection particles is present on the base medium, whereby the reflection particles are raised above the surface of the hardened mixture or the transfer adhesive.

14. Reflection transfer according to any of claims 10, 12, 13, **characterized in that** a transfer medium (5) is applied onto the transfer with the raised reflection particles (4).

15. Reflection transfer according to any of claims 10, 12 to 14, **characterized in that** the reflection particles (4) are essentially spherical in shape and have a grain diameter in the range from 10 to 100 µm, preferably 25 to 40 µm, or that they essentially have the shape of chips or needles with a longitudinal extension in the range from 10 to 110 µm, preferably 40 to 80 µm, or that they are mixtures thereof.

## Revendications

1. Procédé de fabrication d'un transfert réfléchissant pour sérigraphie comprenant les étapes suivantes :
- mise en place d'un support de base (1) ne réagissant pas aux agents adhésifs,
- application par impression d'une colle de transfert (2) sur le support de base (1),
- application d'une couleur réfléchissante (3), la couleur réfléchissante contenant une pluralité de particules réfléchissantes,
- séchage du transfert.

2. Procédé selon la revendication 1, **caractérisé en ce que**, avant l'application de la couleur réfléchissante (3), une couche de couleur intermédiaire (8) est appliquée au cours d'une étape supplémentaire sur la colle de transfert (2) imprimée.

3. Procédé selon la revendication 1 ou 2, **caractérisé en ce que** la colle de transfert (2) est séchée après son application sur le support de base (1) et avant l'application de la couleur réfléchissante (3) et/ou de la couche de couleur supplémentaire (8).

4. Procédé selon la revendication 2 ou 3, **caractérisé en ce que** la couche de couleur intermédiaire (8) est séchée avant l'application de la couleur réfléchissante (3).

5. Procédé de fabrication d'un transfert réfléchissant pour sérigraphie comprenant les étapes suivantes :
- mise en place d'un support de base ne réagissant pas aux agents adhésifs,
- application par impression sur le support de base d'un mélange contenant une colle de transfert et une couleur réfléchissante, le mélange contenant une pluralité de particules réfléchissantes, ou d'une colle de transfert qui contient une pluralité de particules réfléchissantes,
- séchage du transfert.

6. Procédé selon l'une quelconque des revendications précédentes, **caractérisé en ce qu'**un milieu de transition (5) est appliqué en outre sur le transfert séché et durci.

7. Procédé selon l'une quelconque des revendications précédentes, **caractérisé en ce que** la colle de transfert est transparente, laisse passer les couleurs ou est entièrement teintée, en particulier est entièrement teintée en blanc.

8. Procédé selon l'une quelconque des revendications précédentes, **caractérisé en ce que** l'on utilise des particules réfléchissantes (4) qui sont sensiblement sphériques avec une granulométrie de l'ordre de 10 à 100 µm, de préférence de 25 à 40 µm, ou qui ont sensiblement la forme d'écaillés ou d'aiguilles avec une dimension longitudinale de l'ordre de 10 à 110 µm, de préférence de 40 à 80 µm, ou qui sont formées par un mélange de celles-ci.

9. Procédé selon l'une quelconque des revendications précédentes, **caractérisé en ce que** les couches du transfert sont appliquées sur le support de base, de telle sorte que le motif représenté est dans le bon sens sur une vue de dessus.

10. Transfert réfléchissant formé par une succession de couches:
support de base (1), colle de transfert (2), couche de couleur intermédiaire (8) optionnelle, couleur réfléchissante (3), sachant que la couleur réfléchissante (3) contient une pluralité de particules réfléchissantes (4) et les particules réfléchissantes (4) sont en relief sur la surface de la couleur réfléchissante (3) durcie.

11. Substrat sur lequel est appliqué un transfert réfléchissant selon la revendication 10.

12. Transfert réfléchissant selon la revendication 10, **caractérisé en ce que** la colle de transfert (2) est transparente et ledit transfert contient une couche de couleur intermédiaire (8) blanche.

13. Transfert réfléchissant comprenant un support de base, **caractérisé en ce que** sur le support de base est déposé un mélange formé par une colle de transfert et une couleur réfléchissante avec une pluralité de particules réfléchissantes ou une colle de transfert avec une pluralité de particules réfléchissantes, sachant que les particules réfléchissantes sont en relief sur la surface du mélange durci ou de la colle de transfert.

14. Transfert réfléchissant selon les revendications 10, 12 et 13, **caractérisé en ce qu'**un milieu de transition (5) est déposé sur le transfert avec les particules réfléchissantes (4) en relief.

15. Transfert réfléchissant selon l'une quelconque des revendications 10, 12 à 14, **caractérisé en ce que** les particules réfléchissantes (4) sont sensiblement sphériques avec une granulométrie de l'ordre de 10 à 100 µm, de préférence de 25 à 40 µm, ou ont sensiblement la forme d'écaillés ou d'aiguilles avec une dimension longitudinale de l'ordre de 10 à 110 µm, de préférence de 40 à 80 µm, ou sont formées par un mélange de celles-ci.
